# EUROPEAN PATENT APPLICATION

(11) **EP 1 906 394 A1**
(43) Date of publication of application: **02.04.2008**
(21) Application number: 06127049.2
(22) Date of filing: 22.12.2006
(51) Int. Cl.: G11B 7/09, G11B 7/26

(54) **Linear motor for laser beam recorder**

(30) Priority: 29.09.2006 EP 06020572
(71) Applicant: Singulus Mastering B.V., 5657 EN Eindhoven (NL)
(72) Inventor: Van der Krieken, Peter, 5657 EN Eindhoven (NL); Beltman, Arend-Jan Johann, 5657 EN Eindhoven (NL); Cox, Hedrikus Herman Marie, 5657 EN Eindhoven (NL); Du Pau, Cornelis Petrus, 5657 EN Eindhoven (NL)
(74) Representative: Vossius & Partner

(57) **Abstract**

The present invention provides a linear motor for a laser beam recorder for mastering of optical media. The linear motor comprises a base and an actuator, the actuator being mounted on the base in a flexible way, such as via a leaf spring. The actuator may comprise a balance mass acting as a counter mass. The balance mass is preferably formed by an essential component of the linear motor.

## Description

The present invention relates to mastering optical media using a laser beam recorder and, in particular, to linear motors used in the laser beam recorder for moving a focused laser spot over a substrate.

In laser beam recorders used for mastering of optical media, a focused laser spot is moved over a substrate to illuminate a photosensitive material, e.g., a photoresist, on the substrate in the desired pattern. For most optical media systems, a spiral is recorded with pits and/or grooves. To realize this, the substrate is rotated and the laser spot is translated radially relative with respect to the substrate. That is, either the rotating substrate can translate or the focused spot can translate. In order to keep the recording spot in focus at the substrate surface, a laser beam recorder typically further comprises a focus unit. The focus unit moves the objective lens of the laser beam recorder in the direction normal to the substrate plane. The focus measurement may be done by looking at the recording spot.

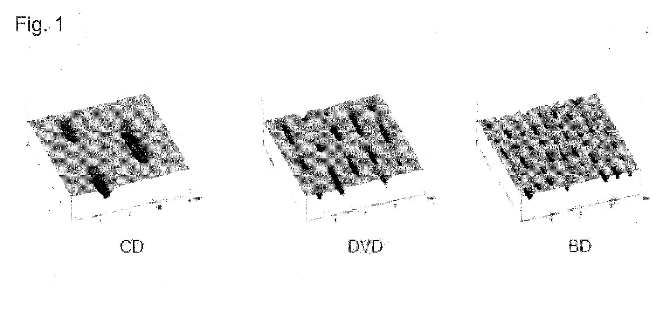

For the linear movement of the focus unit and the translation unit linear motors are often used. In order to meet the stringent demands regarding the dimensions of pits and lands when mastering new 3^{rd} generation formats like HD-DVD and Blu-ray Disc, a high accuracy is demanded on equipment motion. Fig. 1 which shows a comparison of scans using an atomic force microscope (AFM) of a CD, a DVD and a Blu-ray Disc. The requirements for laser beam recorders for the new formats are discussed in "Advanced Mastering Technology For High Density Formats. Deep UV Mastering", Singulus Mastering Publication, 2004. Generally, radial position accuracies of less than 10 nm are required for the high-density formats.

In order to improve the accuracy of linear motors, standard mechatronic design steps may be used. A first step is to practice sound mechanical design principles for the mechanical structure of the equipment. This typically involves making all moving mechanical constructions stiff and lightweight to achieve a maximum servo bandwidth, reduce the negative effects of internal resonances and ensure a minimum compliance of the system when loaded with disturbing forces. In addition, a heavy machine base and low frequency vibration insulators are typically used to help mitigate the effect of external vibrations. Furthermore, all movements should be designed using bearings and motors that ensure that no certain changes in either static or dynamic friction occur so that the system behaves "well" in a dynamic sense, i.e., as a linear system without hysteresis and other non-linear behavior. Air bearings and cogging-less linear and rotary motors are therefore commonly used in laser beam recorders.

A disadvantage of the linear motors usually used in laser beam recorders is that reaction forces can excite the base of the linear motor which may lead to dynamic variations elsewhere in the system. For example, reaction forces which occur in the focus unit may lead to disturbances in the radial position or in deviations of the perfect vertical movement of the objective lens.

Thus, there is a need to further improve the accuracy of linear movements in laser beam recorders, in particular the movement of the focus unit and the translation unit. It is therefore an object of the present invention to provide an improved linear motor for a laser beam recorder having an improved positional accuracy.

This object is achieved with the features of the claims.

The present invention is based on the idea to reduce the reaction forces caused by the linear motor by mounting the actuator (or stator) of the linear motor not in a fixed way to the base of the linear motor but in a flexible way, for example via a flexible part. The reaction forces are thereby at least partly absorbed by the flexible part. A balance mass may be included in the actuator which acts as a counter mass to more effectively absorb the reaction forces.

The present invention thus provides a linear motor having a base and an actuator wherein the actuator is mounted to the base in a flexible way. The actuator may comprise a balance mass which acts as a counter mass. Preferably, the balance mass is formed by an existing and essential component of the linear motor so that no additional mass or part is needed.

In one embodiment of the present invention, the linear motor is used in the focus unit of a laser beam recorder. In this embodiment, the focus unit includes a focus linear motor that is adapted to move the objective lens in a direction normal to the substrate plane in order to keep the recording spot in focus in the substrate surface. The focus linear motor may be a voice coil type of motor. In this case, the magnets may be mounted to the movable part which carries the objective lens, while the coils, according to this embodiment, may act as the balance mass. The advantage of this configuration is that above the resonance frequency of the system formed by the balance mass mounted to the focus actuator, there is a significant reduction of the dynamic force acting on the machine structure resulting from driving the objective lens holder. In this way, the objective lens can be driven virtually without exciting the structure of the laser beam recorder by the driving forces needed to maintain focus.

In a second embodiment of the present invention, the linear motor is used for the translation of the focused spot relative to the rotating substrate. It is either possible to translate the rotating substrate while fixing the focused laser spot or to translate the focused spot over the rotating substrate. For the translation unit, the actuator may comprise magnets mounted on a frame fixed by leaf springs to the base. The coils are mounted to the moving part. According to the present embodiment, the magnets may act as a balance mass. In this way, also in this embodiment no additional parts are needed in the translation unit. Furthermore, also in this embodiment the interaction with masses in the base are minimized.

In any case, the actuator (stator) either comprises coils and the moving part (translator) accordingly comprises permanent magnets, or the actuator comprises permanent magnets while the translator comprises coils.

In the following, the present invention is described in more detail with reference to the Figures in which:
- Fig. 1: is a comparison of AFM scans of CD, DVD, and Blu-ray Disc;
- Fig. 2: schematically shows the basic construction of a known laser beam recorder;
- Fig. 3: schematically shows the construction of a laser beam recorder which includes the counterbalance principle according to the present invention in the focus actuator;
- Fig. 4: schematically shows the construction of a translation unit of a laser beam recorder including the counterbalance principle according to the present invention; and
- Fig. 5: shows a laser beam recorder according to the present invention.

A laser beam recorder for mastering 3^{rd} generation optical discs must provide a more accurate placement of features relative to each other compared to a laser beam recorder for mastering CDs or DVDs. Thus, the laser beam recorder must have an improved motion and imaging accuracy and stability. The present invention specifically relates to an improvement of the accuracy of linear motions in a laser beam recorder.

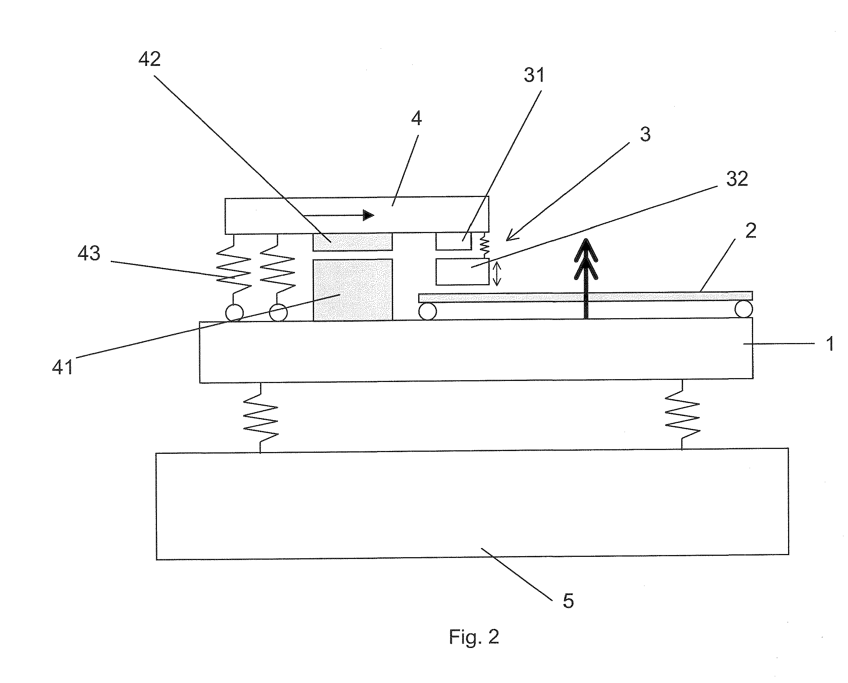

The general construction of a laser beam recorder system (LBR) is shown schematically in Fig 2. The LBR comprises a massive base plate 1, e.g. formed of granite. A glass substrate 2 is rotatably arranged on the base plate. The LBR further comprises a focus unit including a focus linear motor 3 and a translation unit 4. The focus linear motor 3 comprises an actuator (stator) 31 and a translator 32. The translator unit 4 also comprises a linear motor with an actuator (stator) 41 and a translator 42. The translator unit is mounted to the base 1 by air bearings 43. The base plate 1 rests on the ground 5.

The present invention specifically relates to the characteristics of linear motors used in an LBR, in particular as focus linear motor and translation linear motor.

The focus linear motor has to move the objective lens in the direction normal to the substrate plane and to keep the recording spot in focus at the substrate surface. The focus measurement is done by looking at the recording spot. The focus point should be kept in position (focus exactly on the substrate) to within +/- 25 mn.

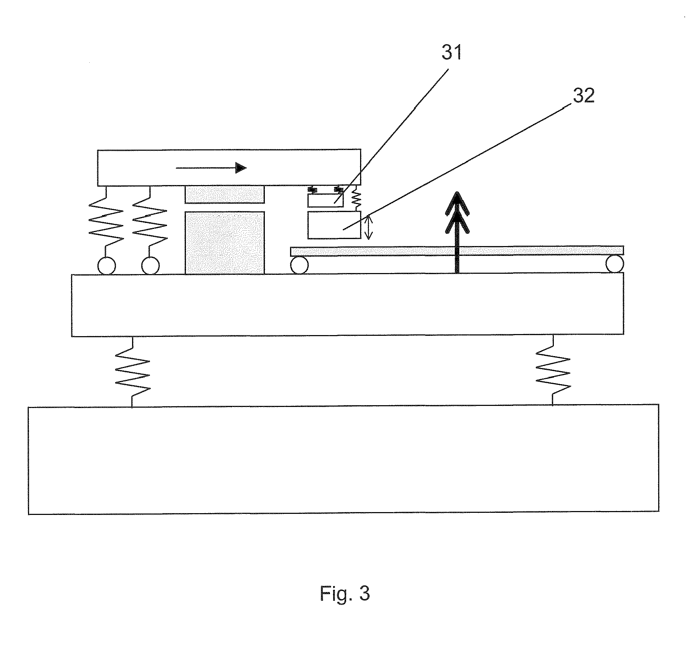

The dynamic concept that is used according to the present invention is illustrated in Fig. 3 with reference to the focus unit. The laser beam recorder according to the present invention comprises a focus unit with a focus linear motor 3. The focus linear motor 3 is a voice coil type of motor. The unit further comprises an objective holder and magnets mounted on the objective holder, that is, to the moveable part (translator) 32 of the motor. The focus linear motor 3 comprises coils that are mounted on a coil frame. The coil frame and the objective holder are each mounted to a focus unit base such as the housing of the focus unit in a flexible way via leaf springs. Thus, the actuator 31, i.e., the stator part of the voice coil linear motor, comprising the coils acts as a counter mass. However, it is also possible that the coils are mounted on the translator while the magnets are mounted on the actuator and thus act as counter mass. The focus unit may in turn be mounted to the translation unit of the laser beam recorder.

The advantage of this solution is that above a certain frequency which is typically the resonance frequency of the mass spring system formed by the counter balance mass, there is a significant reduction of the force acting on the machine structure resulting from driving the objective lens holder. In this way, the objective lens can be driven virtually without exciting the LBR structure by the driving forces needed to maintain focus in this frequency range.

Combining the focus unit provided by the present invention with other known measures taken to improve the accuracy, a focus actuator and control loop design can be achieved that allow focus control to within 20 nm over the required frequency range (servo bandwidth of 5 kHz) and driving of the focus actuator without introducing disturbing forces in other parts of the LBR over a significant frequency range.

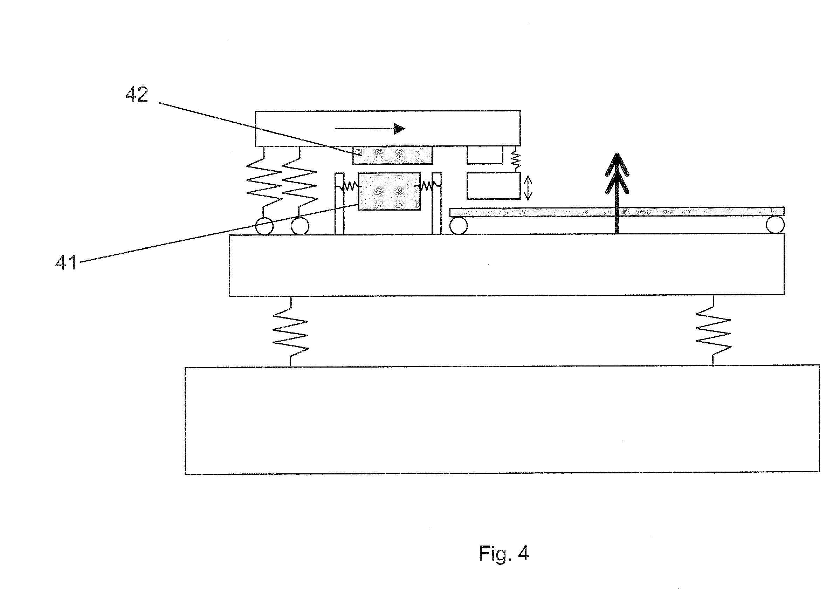

The radial, linear motion of the laser beam recorder has to be relatively slow, yet very well controlled. The construction of a translation unit according to the present invention in the form of a box slide assembly can be seen schematically in Fig. 4. The translation unit comprises coils mounted on the moving part 42 of the translation unit. In the actuator 41, magnets are mounted on a magnet frame. Leaf springs are arranged between the magnet frame and the base. That is, in the translation unit of the present invention, the magnets may act as counter mass. As in the case of the focus unit, it is also possible that the actuator comprises the coils which in this case act as counter mass. Accordingly, the magnets are mounted on the translator in this case. On the translation unit, a focus unit may be mounted.

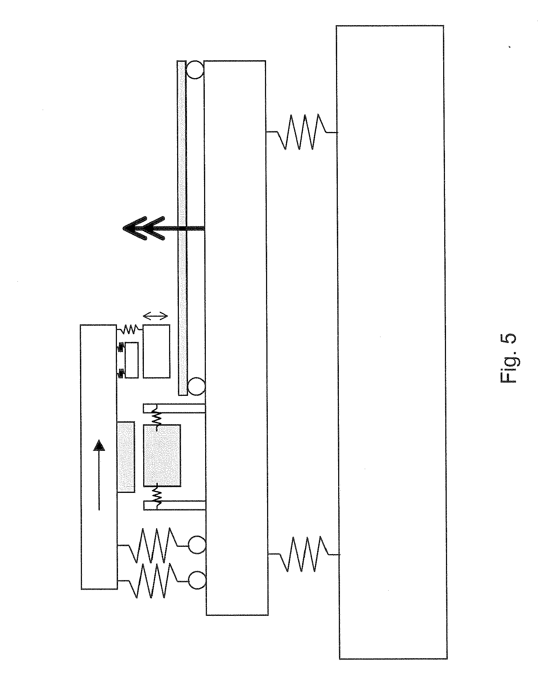

Fig. 5 shows a laser beam recorder incorporating a focus unit and a translation unit according to the present invention.

## Claims

1. A linear motor for a laser beam recorder for mastering of optical media, comprising a base and an actuator, wherein the actuator is mounted on the base in a flexible way.

2. The linear motor according to claim 1, wherein the actuator comprises a balance mass acting as a counter mass.

3. The linear motor according to claim 1 or 2, wherein the actuator is mounted on the base via a leaf spring.

4. The linear motor according to claim 2 or 3, wherein the balance mass is formed by an essential component of the linear motor.

5. A focus unit for a laser beam recorder comprising the linear motor according to any one of the preceding claims.

6. The focus unit according to claim 5, wherein the linear motor is of a voice coil type comprising the actuator and a translator.

7. The focus unit according to claim 6, wherein the translator comprises an objective holder.

8. The focus unit according to claim 6 or 7, wherein a magnet is mounted on the translator.

9. The focus unit according to any one of claims 6 to 8, wherein the balance mass is formed by a coil assembly included in the voice coil type motor.

10. The focus unit according to claim 6 or 7, wherein a coil assembly is mounted on the translation.

11. The focus unit according to claim 6, 7 or 10, wherein the balance mass is formed by a magnet included in the voice coil type motor.

12. A translation unit for a laser beam recorder comprising the linear motor according to any one of claims 1 to 4.

13. The translation unit according to claim 12, wherein the balance mass is formed by a magnet included in the linear motor.

14. The translation unit according to claim 12, wherein the balance mass is formed by a coil assembly included in the linear motor.

15. The translation unit according to claim 12, 13 or 14, further comprising a focus unit mounted on the translation unit.

16. A laser beam recorder comprising the focus unit according to any one of claims 5 to 11.

17. The laser beam recorder of claim 16 comprising the translation unit according to claim 15.

18. The laser beam recorder comprising the translation unit according to any one of claims 12 to 14.
